# EUROPEAN PATENT APPLICATION

(11) **EP 4 703 156 A1**
(43) Date of publication of application: **04.03.2026**
(21) Application number: 25197534.8
(22) Date of filing: 22.08.2025
(51) Int. Cl.: B60C 11/12

(54) **TIRE TREAD WITH TILTED SIPES**

(30) Priority: 27.08.2024 US 202418815901
(71) Applicant: The Goodyear Tire & Rubber Company, Akron, OH 44316 (US)
(72) Inventor: GEELEN, Stephane Jose, L-7750 Colmar-Berg (LU); FULOP, Tibor, L-9648 Erpeldange (LU); POLFER, Pit Jean-Pierre Fernand, L-2521 Luxembourg (LU); MULLER, Philippe Joseph Auguste, B-6971 Champlon (BE)
(74) Representative: Kutsch, Bernd

(57) **Abstract**

A tire tread and a tire is disclosed. The tire tread comprises a groove (26) with a groove depth and a tread element (22) adjacent to the groove (26). The tread element (22) comprises a tread surface (20) intended to engage a ground surface, a radial direction (R) perpendicular to the tread surface (20), and a sipe (24) radially extending from the tread surface (20). The sipe (24) has, along the radial direction (R), an outer section (52) parallel to the radial direction (R), an inner section (54) parallel to the radial direction (R), said inner section (54) comprising an even outer edge (56), and an inclined section (58) between the outer section (52) and the inner section (54). The inclined section (58) is inclined with respect to the radial direction (R) under an inclination angle of at most 60° and/or at least 5° and the inclined section (58) comprises undulations (82) extending along the even outer edge (56). Also, a sipe blade (80) for molding a sipe (24) in such a tread element (22) is disclosed.

## Description

### Field of the Invention

The present patent application is directed to a tire, in particular a pneumatic tire, comprising sipes in tread elements forming the tire tread.

### Background of the Invention

Multiple types of tires comprise treads having sipes in their tread blocks or tread ribs. These sipes form narrow grooves. In particular, in modern long-haul drive tires such sipes are part of the tread design. In general, such sipes may increase mileage and fuel economy so that they have often been applied in the past. However, it has been observed that under heavy duty or extensive use such sipes may provoke fatigue cracks starting to propagate at the bottom of the sipes.

Sipes exhibiting radial stages, wherein on of said stages is inclined with respect to the radial direction, may constitute an improvement with respect to earlier tread designs including sipes having essentially a perpendicular orientation with respect to the surface of the tread blocks. Nevertheless, tire performance may be reduced by the mentioned design. In particular, a considerable overhang of the tread block portions divided by the sipes exists, leading to drawbacks in performance and durability of the tire.

JP 2002 002234 A discloses a pneumatic tire having a tread portion that is in contact with the road surface for one round, and a plurality of land portions are arranged in the tread portion along the circumferential direction of the tread portion. There are multiple types with different lengths along the circumferential direction, extending in the direction intersecting the circumferential direction of the tread, and forming an inclined part between the surface side part of the land part and the groove bottom side part. A pneumatic tire having a sipe that is formed on the land portion and the length of the inclined portion is changed in proportion to the length of the land portion.

WO 2017/028972 A1 discloses a tread profile for a vehicle pneumatic tire, having profile elements having fine cuts having a straight main extension direction which, at least in one section of the extent, in the radially outer surface along the extent of the profile elements, are each formed having a course having a first wavy or zigzag shape oriented along the main extension direction and having a first zero crossing line oriented in the main extension direction, wherein, in relation to the zero crossing line, the wavy or zigzag shape defines peaks and valleys formed alternately along the main extent having an amplitude A1, wherein, at least in an extension region between the extreme value formed in a peak and the extreme value formed in an adjacent valley of the first waving or zigzag shape, the final cut is formed having a course formed by superimposing the first wavy or zigzag shape having a second wavy or zigzag shape.

US 9,889,711 B2 discloses a pneumatic tire comprising: at least one pair of parallel annular beads; at least one carcass ply wrapped around said beads; a tread; first and second sidewalls disposed between said tread and one of said at least one pair of beads; the tread comprising tread blocks and/or tread ribs, wherein the tread blocks and/or tread ribs comprise sipes extending essentially in an axial direction of the tire, the sipes consisting of an upper portion essentially aligned with the radial direction of the tire, a mid-portion having a lower end inclined in a forward direction of rotation of the tire, and a lower portion essentially aligned with the radial direction of the tire.

US 2001/002602 A1 discloses a pneumatic tire, comprising a tread having a plurality of block-shaped land portions separated from one another by a plurality of main grooves extending in a circumferential direction and a plurality of lug grooves intersecting the main grooves, each block-shaped land portion having a plurality of lateral sipes, each of the sipes being formed of: a first linear portion extending substantially vertically from a block-shaped land portion surface, a second linear portion extending substantially vertically but being separated from the block-shaped land portion surface and a slanted portion connecting the first linear portion with the second linear portion and slanting toward a wall of the block-shaped land portion, the slanted portion of the sipes having a center position at a location 10% to 60% with respect to total vertical sipe depth.

US 6,427,737 B1 discloses a pneumatic tire having a tread pattern, said tread pattern comprising: block-shaped land portions demarcated by a plurality of main grooves extending in a circumferential direction of the tire and by a plurality of lug grooves intersecting the main grooves; and at least four sipes provided in each block-shaped land portion, wherein each of the sipes has, at least on a tread surface, an amplitude in a direction orthogonal to a longitudinal direction of the sipe, each of the sipes including a first portion, a second portion and a third portion, the first portion being a portion of the sipe located on the tread surface side in a depth wise direction, the second portion being a portion of the sipe located on the sipe bottom side of the depth wise direction, the first portion and the second portion being connected to each other by the third portion, the third portion extending in a direction which intersects a radial direction of the tire wherein two of said at least four sipes define a small block having a tread surface portion and a bottom portion, the width of the bottom portion being greater than the width of the tread surface portion.

DE 44 278 95 A1 discloses a vehicle tire with a tread, which in planar view at least in one of its axial edge regions has essentially axially extending incisions, which are corrugated in such a way that the wave crests and valleys are essentially straight lines that extend diagonally in the transverse plane. The inclination of the wave crests and valleys is oriented in such a way that when walking in the transverse plane along the sipes reach radially outwards to axially inwards.

There is a need to improve drive of a tire, notably on a snowy surface. There is a need to optimize drive, fuel efficiency and the lifetime of a tire.

### Summary of the Invention

The invention relates to a tire tread in accordance with claim 1 or 10, respectively, to a tire in accordance with claim 14 and to a sipe blade in accordance with claim 15.

Dependent claims refer to preferred embodiments of the invention.

In accordance with a first preferred aspect, the invention provides a tire tread comprising: a groove with a groove depth; a tread element adjacent to the groove; the tread element comprising: a tread surface intended to engage a ground surface; a radial direction perpendicular to the tread surface; a sipe radially extending from the tread surface, along the radial direction said sipe exhibits: an outer section parallel to the radial direction; an inner section parallel to the radial direction, said inner section comprising an even outer edge; an inclined section between the outer section and the inner section, said inclined section being inclined with respect to the radial direction of an inclination angle of at most 60°; said inclined section comprises undulations extending along the even outer edge.

The invention provides for a staggered sipe configuration, wherein the center section is undulated and inclined with respect to the other sections. This configuration improves grip, notably when applied to a portion of the tread that is tilted with respect to the axial direction.

Preferably, the inclination angle ranges from 5° to 30°.

Preferably, the inclined section radially extends on 20% to 75% of the groove depth.

Preferably, the outer section comprises an outer radial height ranging from 0.05 mm to 2.00 mm.

Preferably, the inner section comprises an inner radial height ranging from 20% to 75% of the groove depth.

Preferably, the sipe comprises a radial connection joining the inclined section to the inner section, the radial connection comprising an undulated outer edge, and an even inner edge adjacent to the even outer edge.

Preferably, the radial connection extends along on one of: at least 5%, at least 10%, at least 15%, of the groove depth.

Preferably, the inner section is radially larger than the outer section.

Preferably, the sipe comprises a main portion enclosing the undulations and side projections extending from the main portion, the side projections being radially at distance from the inner section.

Preferably, the tread element comprises a chamfered leading edge and a chamfered trailing edge with a chamfer height which is radially larger than the outer section.

Preferably, the undulations of the inclined section radially extend in the outer section, said undulations being continuous from the inclined section to the outer section.

Preferably, the undulations comprise a constant amplitude along a radial height and an axial length of the inclined section.

Preferably, the tire tread comprises an axial direction; the tread element comprises a first main elongation which is inclined of a first bias angle with respect to the axial direction, the tire tread further comprises a second tread element which exhibits: a second radial direction, a second main elongation which is inclined of a second bias angle with respect to the axial direction, said second bias angle being opposite to the first inclination angle; a second sipe which radially extends from the tread surface; along the second radial direction said second sipe exhibits: a second outer section parallel to the second radial direction; a second inner section parallel to the second radial direction, said second inner section comprising a second even outer edge; a second inclined section between the second outer section and the second inner section, said second inclined section being inclined with respect to the radial direction of a second inclination angle of at most 60°; said second inclined section comprises second undulations extending along the second even outer edge.

Preferably, the inclination angle ranges from 10° to 20°.

Preferably, the inclined section radially extends on 30% to 60% of the groove depth.

Preferably, the undulation comprises first curves and second curves which forms an alternation.

Preferably, the inner section comprises a tubular bottom.

Preferably, the sipe is a first sipe, the tread element further comprises a second sipe which is parallel to the first sipe, which extends from an equatorial plan toward a sidewall of the tire.

Preferably, the sipe is parallel to the groove.

Preferably, the groove is a main groove.

Preferably, the undulations are continuous along the main direction of the sipe.

Preferably, the outer even edge is even in three dimensions.

Preferably, the sipe comprises a sipe total height equal to the groove height.

Preferably, the sipe comprises a sipe width ranging from 0.4 mm to 1.5 mm.

In accordance with another preferred aspect, the invention provides a tire tread comprising: a groove with a groove depth, a tread element; the tread element comprising a tread surface; a radial direction perpendicular to the tread surface; an axial direction; the tread element comprises a center portion, a shoulder portion axially outward the center portion; the center portion comprises a center sipe radially extending from the tread surface, the center sipe exhibits: a center outer section perpendicular to the tread surface; a center inner section perpendicular to the tread surface, said center inner section comprising an even outer edge; a center inclined section between the center outer section and the center inner section, said center inclined section being inclined with respect to the radial direction of an inclination angle; said inclined section comprises undulations extending along the even outer edge; a center main direction inclined of a first angle with respect to the axial direction at the tread surface; the shoulder portion comprises a shoulder sipe radially extending from the tread surface, the shoulder sipe exhibits: a shoulder outer section perpendicular to the tread surface; a shoulder inner section perpendicular to the tread surface; a shoulder inclined section inclined with respect to the radial direction, which is between the shoulder outer section and the shoulder inner section, and which comprises two smooth opposite faces; a shoulder main direction inclined of a second angle with respect to the axial direction, said first angle being larger than the second angle.

Preferably, the first angle is one of: at least 40°, at least 60°, at least 75°.

Preferably, the undulations of the center inclined section comprise: a mid-plane, an undulation height with respect to the mid-plane; at least one of the shoulder inner sections and the center inner section comprises bosses with a boss height, said boss height being is smaller than the undulation height.

Preferably, the shoulder sipe comprises a chamfer at a leading side, and a sharp edge at a trailing side.

Preferably, the shoulder inner section comprises a sipe bottom with a side end, said side end comprising a continuous curvature extending up to the tread surface.

Preferably, the tread element comprises a curved portion axially joining the shoulder portion and the center portion; the center sipe extends within the curved portion.

Preferably, the tread surface, the shoulder portion comprises a first width perpendicularly to the shoulder main direction, the center portion comprises a second width perpendicularly to the center main direction; said first width being larger than the second width.

Preferably, the first angle is one of: less than 30°, less than 20°, less than 10°, less than 5°.

Preferably, the groove is larger than the sipe.

Preferably, the groove is at least ten times larger than the sipe.

In accordance with another preferred aspect, the invention provides a sipe blade for molding a sipe in a tire tread element, said sipe blade exhibiting a radial direction; along the radial direction the sipe blade comprises: an outer section parallel to the radial direction; an inclined section inclined with respect to the radial direction of an inclination angle ranging from 5° to 60°; main undulations spanning in the inclined section and comprising a radially inner end; an inner section parallel to the radial direction, said inner section comprising an even outer edge extending along the undulations and being radially inward the radially inner end.

Also disclosed is a tire mold comprising such a sipe blade.

In accordance with another preferred aspect, the invention provides a tire tread comprising a groove with a groove depth, a tread element; the tread element comprising a tread surface intended to engage a ground surface; a radial direction perpendicular to the tread surface, the tread element comprises: a sipe radially extending from the tread surface, the sipe exhibits: an outer section parallel to the radial direction and/or perpendicular to the tread surface; an inclined section inclined with respect to the radial direction of an inclination angle ranging from 5° to 30°; said inclined section radially extending on 40% to 50% of the groove depth; an inner section parallel to the radial direction.

In accordance with another preferred aspect, the invention provides a tire tread comprising a groove with a groove depth, a tread element demarcated by the groove, the tread element comprising a tread surface intended to engage a ground surface; a radial direction perpendicular to the tread surface, the tread element comprises: a sipe radially extending from the tread surface, the sipe exhibits: an outer section parallel to the radial direction; an inclined section inclined with respect to the radial direction of an inclination angle ranging from 15° to 25°; said inclined section radially extending on 20% to 75% of the groove depth; an inner section parallel to the radial direction.

In accordance with another preferred aspect, the invention provides a tire tread comprising: a groove with a groove depth; a ground engaging tread element adjacent to the groove; the tread element comprising: a tread surface; a radial direction perpendicular to the tread surface; a sipe radially extending from the tread surface, along the radial direction said sipe exhibits: an outer section parallel to the radial direction; an inclined section between the outer section and the inner section, said inclined section being inclined with respect to the radial direction of an inclination angle ranging from 2° to 60°; said inclined section comprising undulation with a first amplitude; an inner section parallel to the radial direction, said inner section comprising a second amplitude which is smaller than the first amplitude.

### Definitions

"Carcass" means the tire structure apart from the belt structure, tread, undertread, and sidewall rubber over the plies, but including the beads.

"Crown" refers to the circumferentially outermost portion of the carcass substantially within the width limits of the tread.

"Design Cycle" is a mold manufacturing term that refers to the smallest fundamental unit of tire tread that contains all design features and is continually repeated around the tire with slightly varying lengths according to a specific pitching sequence.

"Equatorial plane (EP)" means the plane perpendicular to the tire's axis of rotation and passing through the center of its tread.

"Groove" means an elongated void area in a tread that may extend circumferentially or laterally about the tread in a straight, curved, or zig-zag manner. Circumferentially and laterally extending grooves sometimes have common portions and may be subclassified as "wide", "narrow" or "slot". In the appended drawings, slots are illustrated by single lines because they are so narrow. Grooves generally remain open in a tie footprint.

"Sipes" refer to small slots molded into ribs of tire that subdivides the tread surface and improves traction characteristics. Sipes generally close in a tire footprint.

"Open angle" refers to a groove wall angle which causes the groove to be wider at the top as compared to its width at the tread base.

"Pitch" refers to the distance from one peak in the tread pattern to the next.

"Pneumatic tire" means a laminated mechanical device of generally toroidal shape (usually an open-torus) having beads and a tread and made of rubber, chemicals, fabric and steel or other materials. When mounted on the wheel of a motor vehicle, the tire through its tread provides traction and contains the fluid that sustains the vehicle load.

"Rib" means a circumferentially extending strip of rubber on the tread which is defined by at least one circumferential "wide groove" and either a second such groove or a lateral edge of the tread, the strip of rubber being laterally undivided by full-depth narrow or wide grooves.

"Tread" means a molded rubber component which, when bonded to a tire casing, includes that portion of the tire that comes into contact with the road when the tire is normally inflated and under normal load.

"Tread element" or "traction element" means a rib or a block element.

"Tread width" means the arc length of the tread surface in the axial direction, that is, in a plane parallel to the axis of rotation of the tire.

### Brief Description of the Drawings

The invention will be described by way of example and with reference to the accompanying drawings in which:
FIG. 1 is a perspective partial view of a tire comprising a tread portion having tread elements with sipes in accordance with an embodiment of the invention;
FIG. 2 is a front view of a circumferential portion of a tire tread in accordance with an embodiment the invention;
FIG. 3 is a front view of a circumferential portion of a tire tread in accordance with another embodiment the invention;
FIG. 4 shows a partial cross section of a tread element of a tire tread in accordance with an embodiment of the invention, said cross section being parallel to the equatorial plane of the tire or perpendicular to the sipe;
FIG. 5 shows a partial cross section of a tread element of a tire tread in accordance with another embodiment of the invention, said cross section being parallel to the equatorial plane of the tire or perpendicular to the sipe;
FIG. 6 is a front perspective of a sipe blade in accordance with an embodiment of the invention;
FIG. 7 is a side perspective of a sipe blade in accordance with another embodiment of the invention; and
FIG. 8 is a perspective view of a sipe blade in accordance with yet another embodiment of the invention.

### Detailed Description of Preferred Embodiments of the Invention

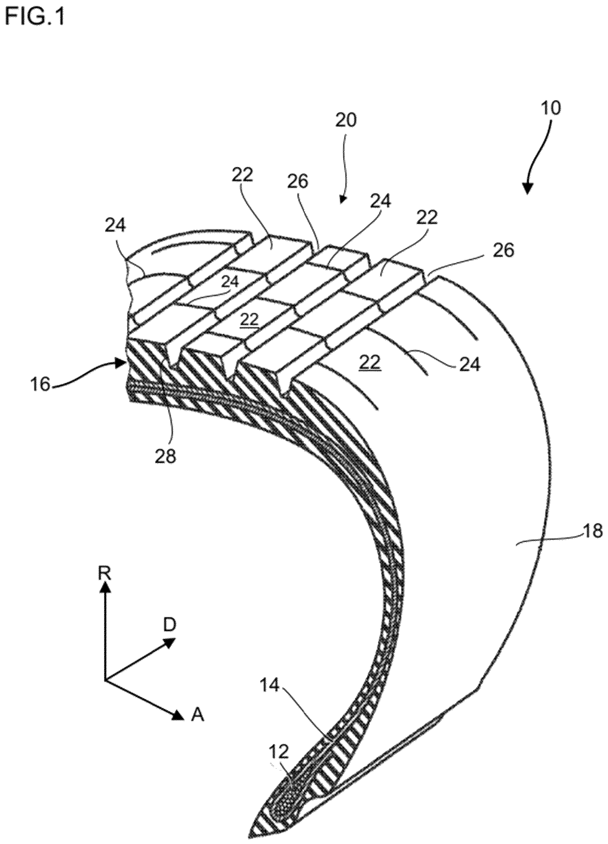

FIG. 1 depicts one preferred embodiment of the invention showing a tire 10 comprising beads 12 and a carcass ply 14 wrapped around said beads 12 and a tread 16 radially above a crown area of the tire 10. Sidewalls 18 are arranged radially between the tread 16 and the beads 12 of the tire 10. The tread 16 comprises a tread surface 20. The tread surface 20 is intended to engage the ground. The tread surface 20 is annular. For the sake of a better comprehensibility, a coordinate system has been included in FIG. 1 showing the radial direction R, the axial direction A and the direction of the tire's rotation D, also designated a circumferential direction. The axial direction A is along to the tire rotation axis.

In the embodiment depicted in FIG. 1 the tread comprises tread elements 22. As generally known, such tread elements 22 surround the tire 10 in a circumferential direction. The tread elements 22 are generally tread ribs. The tread surface 20 is the radially outermost surface of the tread elements 22. The tread elements 22 of the tire 10 comprise sipes 24. The sipes 24 radially extend from the tread surface 20. In accordance with the current embodiment, the sipes 24 extend essentially in the axial direction A of the tire 10. However, this shall comprise also directions within an angle with respect of the axial direction A.

In accordance with the depicted embodiment, the sipes 24 have a sipe width of at most 1.5 mm, preferably at most 1 mm, more preferably of at most 0.50 mm, and even more preferably of at most 0.30 mm; for instance, in the circumferential direction of the tire 10. In particular, the sipes 24 should not be confused with grooves 26 between different tread elements 22. The grooves are circumferential grooves. The grooves 26 are main grooves. The grooves 26 demarcate the tread elements 22. The tread elements 22 are adjacent the grooves 26. As an alternative or an option, the grooves comprise axial grooves, and/or tilted grooves.

The grooves 26 comprise a groove depth 28. The groove depth 28 is an average groove depth. The groove depth 28 is measured radially, from the tread surface 20 to the groove bottom. The grooves 26 comprise a groove width of at least 2.00 mm or at least 4.00 mm, preferably of at least 15.00 mm. The sipe width is narrower than the groove width, preferably at least five times narrower than the groove width.

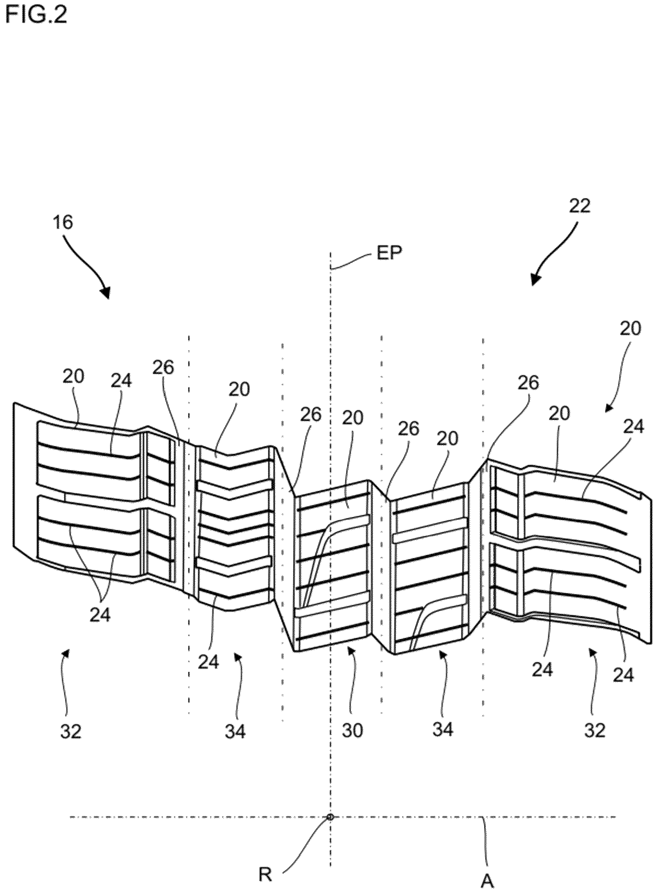

FIG.2 represents a tread portion of a tire. The tire is generally in accordance with FIG.1. The drawn tread portion may be a design cycle. An axial direction A along the tread 16 is represented.

The tread 16 comprises an array of tread elements 22. The tread elements 22 form axial rows. The tread elements 22 comprise tread blocks. The tread blocks define axial rows. The tread surface 20 is at the top of the tread elements 22. The tread 16 exhibits a center portion 30 crossed by the equatorial plane EP. The equatorial plane EP is at the axial center of the tread 16. The tread 16 further comprises shoulder portions 32 at the sidewalls. The grooves 26 demarcate the shoulder portions 32 and the center portion 30. The grooves 26 include a groove depth, such as an average groove depth. As an option, the tread 16 further comprises intermediate portions 34. The intermediate portions 34 are at both sides of the center portion 30. The intermediate portions 34 separate the center portion 30 from each of the shoulder portions 32. They are inserted at each side. The portions are axially distributed along the axial direction A.

Each of the center portion 30, the shoulder portions 32 and the intermediate portions 34 comprise tread elements 22. The tread elements 22 preferably comprise tread blocks, or ribs. For instance, the center portion 30 comprises at least one rib, whereas the shoulder portions 32 comprise circular arrays of tread blocks, which are separated by axial grooves.

The tread elements 22 form the tread surface 20 and comprise sipes radially extending from the tread surface 20. The tread elements 22 comprise sipes 24. The sipes 24 radially extend from the tread surface 20. The sipes 24 generally extend along the axial direction A. The sipes 24 exhibit undulations at one radial section, for instance an inclined section with respect to the radial direction R. In the center portion 30, the sipes 24 are straight. In the shoulder portions 32, the sipes 24 extend along arcuate paths. In the intermediate portions 34, the sipes 24 are straight at one side, and form chevrons at the other side. In the shoulder portions 32, the tread elements 22 each comprise several sipes 24.

At least one or each of the sipes 24 exhibits: an outer section parallel to the radial direction; an inner section parallel to the radial direction R, said inner section comprising an even outer edge; an inclined section between the outer section and the inner section, said inclined section being inclined with respect to the radial direction R of an inclination angle of at most 60°; said inclined section comprises undulations extending along the even outer edge. The inclination angle is of at most 50°, preferably at most 40°.

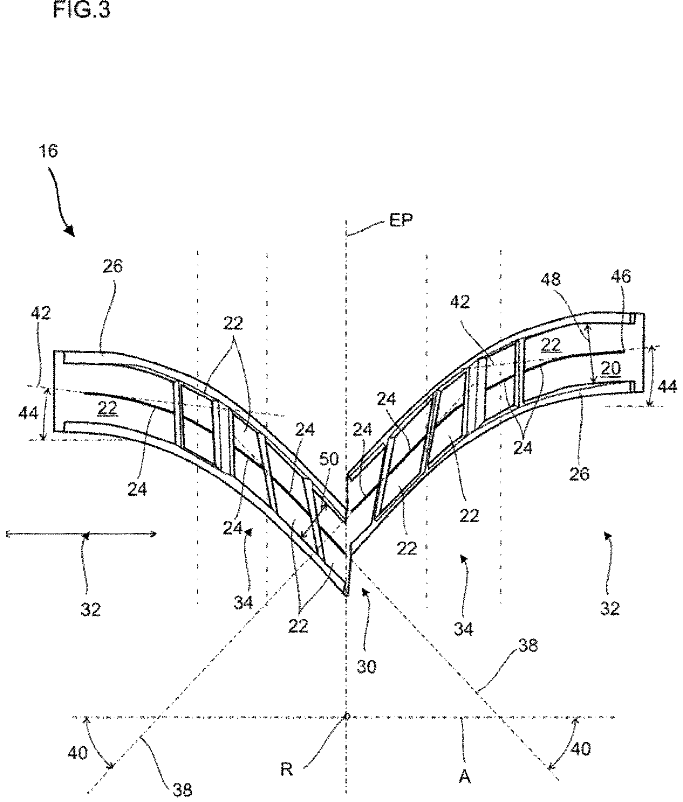

FIG.3 represents a tread portion of a tire. The tire is generally in accordance with FIG.1. The illustrated tread portion may be a design cycle. An axial direction A crossing the tread 16 is represented. The tread 16 is similar to the one represented in FIG.2, it differs on the alignment of the tread elements 22.

The tread 16 comprises an array of tread elements 22. The tread elements 22 are arranged in a "V" shape pattern. The tread elements 22 comprise tread blocks. The tread 16 exhibits a center portion 30 crossed by the equatorial plane EP. The equatorial plane EP is at the axial center of the tread 16. The tread 16 further comprises shoulder portions 32 at the sidewalls.

The tread 16 comprises grooves 26. The grooves 26 include circumferential grooves and axial grooves. The axial grooves form a "V" shape pattern on the tread 16. The grooves 26 comprise a groove depth. The circumferential grooves 26 demarcate the shoulder portions 32 and the center portion 30. The axial grooves demarcate the different cycle pitches. The axial grooves circumferentially separate the tread blocks.

As an option, the tread 16 further comprises intermediate portions 34, also demarcated by circumferential grooves. The intermediate portions 34 are at both sides of the center portion 30. The intermediate portions 34 separate the center portion 30 from each of the shoulder portions 32. The portions are axially distributed along the axial direction A.

The tread elements 22 have curved wing shapes. Generally, each tread element 22 axially spans on a half of the tread width. Each tread element 22 projects along the center portion 30, an intermediate portion 34, a shoulder portion 32. The center portion 30 comprises a center sipe radially extending from the tread surface 20.

The center sipe exhibits: a center outer section perpendicular to the tread surface; a center inner section perpendicular to the tread surface, said center inner section comprising an even outer edge; a center inclined section between the center outer section and the center inner section, said center inclined section being inclined with respect to the radial direction R of an inclination angle; said inclined section comprises undulations extending along the even outer edge.

At least one side, the center portion 30, the tread element 22 exhibits a center main direction 38 inclined of a first angle 40 with respect to the axial direction A at the tread surface 20. Each center main direction 38 is an average axis along the tread element 22. It corresponds to a central axis.

At least one or each shoulder portion 32 comprises a shoulder sipe radially extending from the tread surface, the shoulder sipe exhibits: a shoulder outer section perpendicular to the tread surface; a shoulder inner section perpendicular to the tread surface; a shoulder inclined section inclined with respect to the radial direction R, which is between the shoulder outer section and the shoulder inner section, and which comprises two smooth opposite faces.

The shoulder portion 32 exhibits a shoulder main direction 42 inclined of a second angle 44 with respect to the axial direction A, said second angle 44 being narrower than the first angle 40. The first angle 40 is larger than 15°, preferably larger than 45°, more preferably larger than 75°. The second angle 44 is of at most 30°, preferably of at mots 20°. The first angle 40 is at least twice as large as the second angle 44.

The shoulder inner section comprises a sipe bottom with a side end 46. The sipe bottom is a radially innermost edge. The side end 46 is an axial end, or a lateral outer end. The side end 46 is toward the sidewall. The side end 46 of the sipe bottom comprises a continuous curvature extending up to the tread surface 20.

At the tread surface 20, the shoulder portion 32 comprises a first width 48 perpendicularly to the shoulder main direction 42. The center portion 30 comprises a second width 50 perpendicularly to the center main direction 38. The first width 48 and the second width 50 may be average widths. The first width 48 is larger than the second width 50. The first width 48 represents at least 120% of second width 50, preferably at least 140% of the second width 50.

As an alternative or an option, at each side the tread element is divided. The shoulder portion 32 comprises a first tread element with a first main elongation which is inclined of a first bias angle with respect to the axial direction. The center portion 30 the tire tread further comprises a second tread element which exhibits: a second radial direction, a second main elongation which is inclined of a second bias angle with respect to the axial direction, said second bias angle being opposite to the first inclination angle.

The second tread element includes a second sipe which radially extends from the tread surface. Along the second radial direction said second sipe exhibits: a second outer section parallel to the second radial direction; a second inner section parallel to the second radial direction, said second inner section comprising a second even outer edge.

The second sipe exhibits further comprises a second inclined section between the second outer section and the second inner section, said second inclined section being inclined with respect to the radial direction of a second inclination angle of at most 60°; said second inclined section comprises second undulations extending along the second even outer edge.

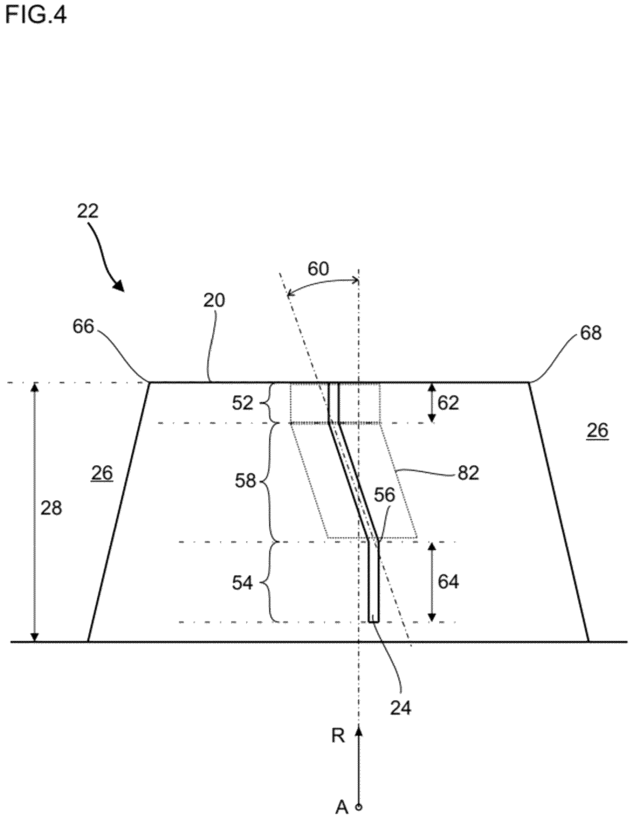

FIG.4 represents a tread element 22 with a sipe 24 of a tire in accordance with the invention. The tire is in accordance with any of FIG.1 to FIG.3. The tread element 22 is between two grooves 26, for instance axial grooves or circumferential grooves. The grooves 26 are open angle grooves.

The tread element 22 exhibits an axial direction A, a radial direction R perpendicular to the axial direction A. The tread element 22 comprises: a tread surface 20 intended to engage a ground. The tread surface 20 is perpendicular to the radial direction R. The tread element 22 further comprises a sipe 24 radially extending from the tread surface 20. The sipe 24 comprises a sipe width ranging from 0.4 mm to 1.5 mm.

Along the radial direction R said sipe 24 exhibits: an outer section 52 parallel to the radial direction R; an inner section 54 parallel to the radial direction, said inner section 54 comprising an even outer edge 56; an inclined section 58 between the outer section 52 and the inner section 54. The outer section 52 and the inner section 54 are perpendicular to the tread surface 20. They are parallel to one another. The inclined section 58 is also designated as center section, or connection section.

The said inclined section 58 is inclined with respect to the radial direction R of an inclination angle 60 of at most 60°. The inclination angle 60 may range from 2° to 45°. Preferably, the inclination angle 60 ranges from 5° to 30°. More preferably, the inclination angle 60 ranges from 10° to 20°.

The inclined section 58 comprises undulations 82 extending along the even outer edge 56. The even outer edge 56 may be a straight edge, or a single curvature edge, with a single radius. The even outer edge 56 is flush, flat. The even outer edge 56 is continuous. The outer even edge 56 is even in at least two dimensions, preferably in three dimensions. The even outer edge 56 comprises at most a single concave portion. The undulations 82 comprise first curves and second curves which forms an alternation along the tread surface 20. The inner section 54 is undulation free. It may be generally smooth.

The inclined section 58 radially extends on 20% to 75% of the groove depth 28. Preferably, the inclined section 58 radially extends on 30% to 60% of the groove depth 28. As an option, the inclined section 58 radially extends on at least 40% of the groove depth; and/or on at most 50% of the groove depth 28.

At the tread surface 20, the sipe 24 exhibits sharp edges. The sharp edge form 90° angles. The outer section 52 comprises an outer radial height 62 ranging from 0.05 mm to 2.00 mm. The bottom of the inner section 54 is radially at distance from the groove bottom. The inner section 54 comprises an inner radial height 64 ranging from 20% to 75% of the groove depth 28. Preferably, the inner radial height 64 range from 30% to 60% of the groove depth 28. The inner radial height 64 is radially longer than the outer radial height 62. The inner section 54 is radially larger than the outer section 52.

The tread element 22 comprises a leading edge 66 and a trailing edge 68 circumferentially opposite the leading edge 66. Radially outward, the sipe 24 leans toward the leading edge 66. The outer section 52 is closer to the leading edge 66, whereas the inner section 54 is closer to the trailing edge 68. The leading edge 66 and the trailing edge 68 are sharp edges. The tread element 22 comprises ridges at the interface between the grooves 26 and the tread surface 20. During drive, the sipe 24 opens. Its width increases. Then, it traps more snow, thereby increasing grip and track control in snowy conditions.

In one embodiment of the invention, the inclination angle ranges from 5° to 30°; and the inclined section radially extends on 40% to 50% of the groove depth.

In one embodiment of the invention, the inclination angle ranging from 15° to 25°; said inclined section radially extending on 20% to 75% of the groove depth.

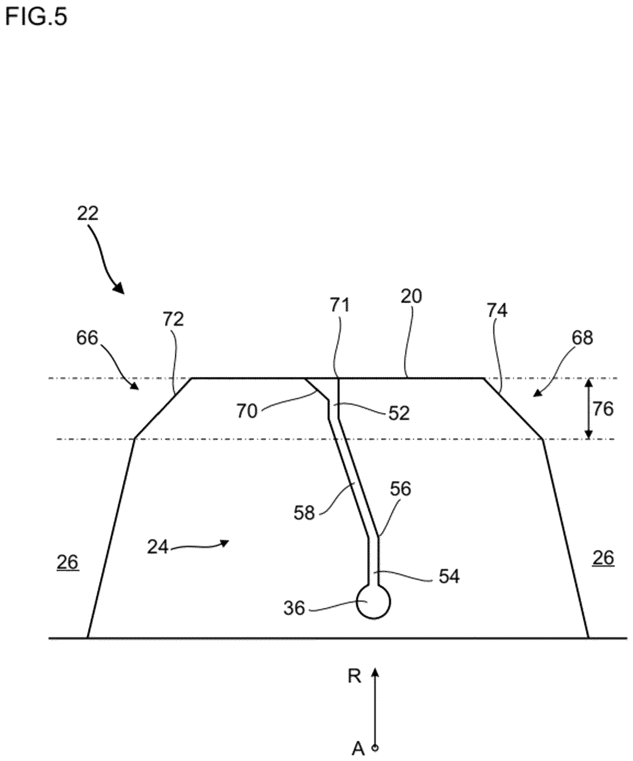

FIG.5 represents a tread element 22 with a sipe 24 of a tire in accordance with the invention. The tread element 22 is similar to the one represented in FIG.4. It differs therefrom in that the outer section 52 exhibits a chamfered 70 at one side, and chamfers at the leading edge 66 and the trailing edge 68. A chamfer replaces a sharp edge by a facet.

The tread element 22 comprises: a tread surface 20; a radial direction R perpendicular to the tread surface 20 and to the axial direction A; a sipe 24 radially extending from the tread surface 20. Along the radial direction R said sipe exhibits: an outer section 52 parallel to the radial direction R; an inner section 54 parallel to the radial direction R, said inner section 54 comprising an even outer edge 56 ; an inclined section 58 between the outer section 52 and the inner section 54, said inclined section being inclined with respect to the outer section 52 and the inner section 54 of an inclination angle of at most 60°. The inclined section 58 comprises undulations extending along the even outer edge 56. The bottom of the inner section 54 may be a tubular bottom 36.

The outer section 52 exhibits a chamfer 70 extending from the tread surface 20. The chamfer 70 widens the outer section 52 radially toward the tread surface 20. The chamfer 70 is inclined in the same direction as the inclined section 58. During drive, when the tire applies a drive torque on the ground, the sipe 24 opens and forms a pocket. Its inner volume increases. The chamfer 70 also increases the opening of the sipe 24, thereby promoting grip on snowy surfaces. The sipe 24, for instance a shoulder sipe, comprises a chamfer 70 at a leading side and a sharp edge 71 at a trailing side.

The tread element 22 comprises a chamfered leading edge 72 and a chamfered trailing edge 74. The chamfered leading edge 72 and the chamfered trailing edge 74 are inclined with respect to the tread surface 20; for instance, at 45°. They are also inclined with respect to the sidewalls of the grooves 26. The chamfered leading edge 72 and the chamfered trailing edge 74 exhibit a chamfer height 76. The chamfer height 76 is radially taller than the outer section 52.

The current chamfer arrangement optimizes grip in snowy weather and on dry surfaces, whereas adapting to the wear state of the tread.

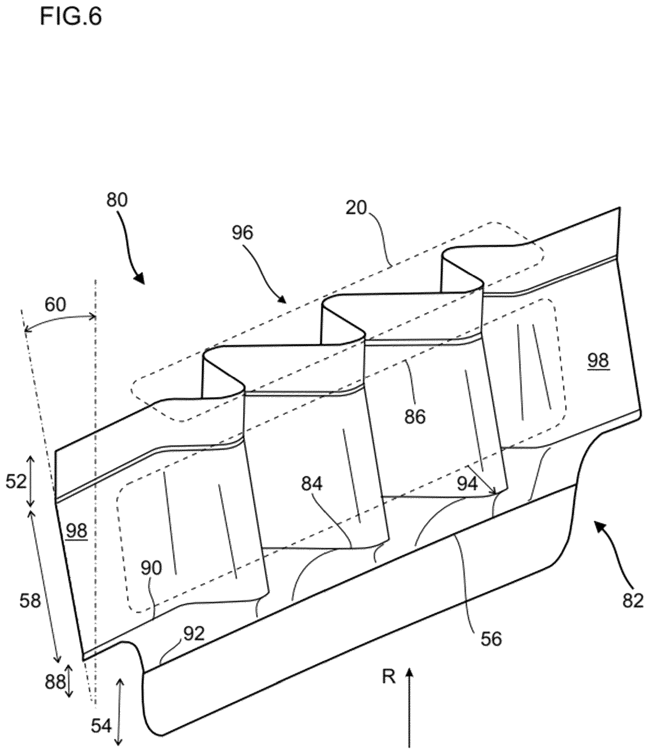

FIG.6 represents a sipe blade 80 for molding a sipe in a tread element of a tire, notably a pneumatic tire. The tire is in accordance with any of FIG.1 to FIG.5. The sipe blade 80 comprises metal. The sipe blade 80 may be produced by 3D printing, or forging. The sipe blade 80 is arranged in a pocket of a tire mold adapted for injection molding.

The sipe blade 80 exhibits a radial direction R, a radially outer surface corresponding to the tread surface 20. The radially outer surface is defined by the radially outer edge of the sipe blade 80. Along the radial direction R the sipe blade 80 comprises: an outer section 52 parallel to the radial direction R; an inclined section 58 inclined with respect to the radial direction R of an inclination angle 60 ranging from 5° to 60°; main undulations 82 spanning in the inclined section 58 and comprising a radially inner end 84. The inclination angle 60 ranges from 10° to 40°, preferably from 10° to 30°.

An inner section 54 is parallel to the radial direction R, said inner section 54 comprises an even outer edge 56 extending along the undulations 82 and being radially inward the radially inner end 84. The inner section 54 forms a strip, with constant radial height. The inner section 54 is straight strip. The inner section 54 is generally planar or slightly curved. The thickness of the inner section 54, with its potential curvature, is narrower than the undulations 82; preferably at least five times narrower, or ten times narrower. The undulations 82 exhibits an alternance of bosses and recesses, on both sides of the inclined section 58. They form a wavy stip.

The undulations 82 of the inclined section 58 radially extend in the outer section 52 as well. The undulations 82 are continuous from the inclined section 58 to the outer section 52. The outer section 52 and the inclined section 58 exhibits a same undulation profile. They comprise the same wave number. The undulations 82 comprise a sinusoidal profile.

The sipe blade 80, and hence the associated the sipe, comprises a radial connection 88 joining the inclined section 58 to the inner section 54. The radial connection 88 comprises an undulated outer edge 90, and an even inner edge 92 adjacent to the even outer edge 56. The radial connection 88 has a three-dimensional shape. It exhibits upper undulation with an amplitude, said amplitude decreasing toward the inner section 54, thus radially inward.

The undulations 82 of the inclined section 58, notably the center inclined section, comprise: a mid-plane 86, an undulation height 94 with respect to the mid-plane 86. The mid-plane 86 is a geometrical plane. It is at mid thickness of the inclined section 58. The undulation height 94 is measured perpendicularly to the mid-plane 86. It corresponds to the maximum amplitude of the undulations 82.

The sipe blade 80, and notably the corresponding sipe, comprises a main portion 96 enclosing the undulations 82, and side projections 98 extending from the main portion 96. The main portion 96 is an undulated portion. The side projections 78 are undulation free. The side projections 78 are flat. The side projections 78 are radially at distance from the inner section 54.

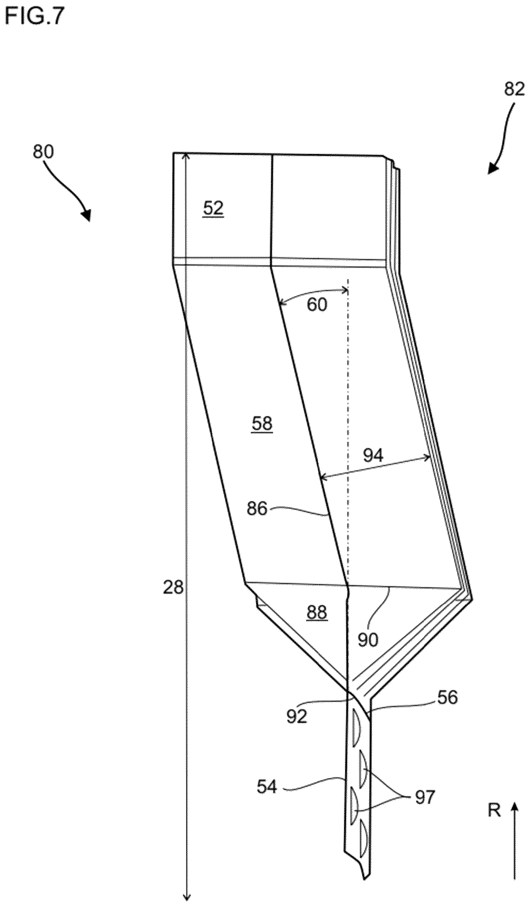

FIG.7 represents a sipe blade 80 in accordance with the invention. The sipe blade 80 enables molding of a sipe of a tread element of a tire. The tire is in accordance with any of FIG.1 to FIG.6. The sipe blade 80 corresponds to the one described in relation with FIG.6.

The sipe blade 80 exhibits an outer section 52, an inclined section 58. The even outer edge 56 demarcates the inner section 54 from the radial connection 88.

The undulations 82 comprise a constant amplitude along a radial height and an axial length of the inclined section 58. The amplitude is constant along the outer section 52 too. The undulations 82 of the inclined section 58, comprise: a mid-plane 86, an undulation height 94 with respect to the mid-plane 86. The mid-plane 86 is a geometrical plane. It is at mid thickness of the inclined section 58. The undulation height 94 is measured perpendicularly to the mid-plane 86. It corresponds to the maximum amplitude of the undulations 82.

The inner section 54, notably of the shoulder inner section and/or the center inner section, comprises bosses 97 with a boss height. The boss height is measured perpendicularly to the inner section 54. The boss height is smaller than the undulation height 94. The increased size of the undulations 82 fosters the locking effect within the sipe.

The sipe blade 80, and notably the associated sipe, comprises a radial connection 88 joining the inclined section 58 to the inner section 54, the radial connection comprises an undulated outer edge 90, and an even inner edge 92 adjacent to the even outer edge 56. The even inner edge 92 and the even outer edge 56 may be merged.

The radial connection 88 extends along: at least 5%, at least 10%, at least 15%, of a groove depth 28. As highlighted in the current figure, the groove depth 28 is larger than the radial height of the sipe blade 80.

The undulations 82 of the inclined section 58 radially projects in the outer section 52; with a same pattern. The undulations 82 are continuous from the inclined section 58 to the outer section 52. The undulations in the inner section 54 are tilted with respect to the undulations 82 in the inclined section 58. The undulation height 94 is equal in both sections. The inner section 54 is deprived of undulation.

In an embodiment of the invention, the inclined section 58 is inclined with respect to the radial direction R of an inclination angle 60 ranging from 2° to 60°. The inclined section 58 comprises undulation 82 with a first amplitude. The inner section 54 is parallel to the radial direction R, said inner section 54 comprises a second amplitude, notably defined by the bosses or its thickness, which is smaller than the first amplitude.

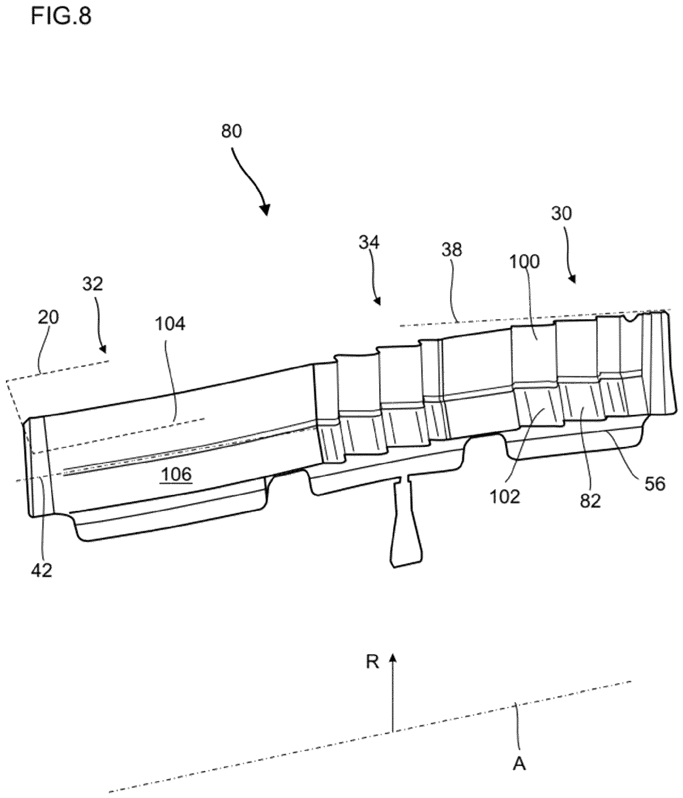

FIG.8 represents a sipe blade 80 in accordance with the invention. The sipe blade 80 enables molding of a sipe of a tread element of a tire. The tire is in accordance with any of FIG.3. The sipe blade is generally as described in any one of FIG.6 to FIG.7.

The sipe blade 80 is adapted for molding a tread element with a hybrid configuration. The tread element includes a sipe with a smooth segment, and an undulated segment. The radial direction R and the axial direction A are represented for orientation purpose. The axial direction A is inclined with respect to the main elongation of the sipe blade 80, however they may be parallel.

The sipe blade 80, notably the associated tread element, comprises a center portion 30, a shoulder portion 32 axially outward the center portion 30, optionally an intermediate portion 34 joining the center portion 30 to the shoulder portion 32.

The center portion 30 comprises a center sipe blade 100 radially extending from the tread surface 20 (represented by a dotted line). The center sipe blade 100 exhibits: a center outer blade section perpendicular to the tread surface 20; a center inner blade section perpendicular to the tread surface, said center inner blade section comprising an even outer edge 56.

The center portion 30 comprises a center inclined blade section 102 between the center outer blade section and the center inner blade section. The center inclined blade section 102 is inclined with respect to the radial direction R of an inclination angle. The center inclined blade section 102 comprises undulations 82 extending along the even outer edge 56. The sipe blade 80 exhibits a center main direction 38 inclined of a first angle with respect to the axial direction A at the tread surface 20 or at mid height of the sipe blade 80.

The shoulder portion 32 comprises a shoulder sipe blade 104 radially extending from the tread surface 20. The shoulder sipe blade 104 exhibits: a shoulder outer blade section perpendicular to the tread surface; a shoulder inner blade section perpendicular to the tread surface; a shoulder inclined blade section 106 inclined with respect to the radial direction, which is between the shoulder outer blade section and the shoulder inner blade section, and which comprises two smooth opposite faces. The sipe blade 80 exhibits a shoulder main direction 42 inclined of a second angle with respect to the axial direction A, said second angle being smaller than the first angle.

The intermediate portion 34 comprises a blade configuration similar to the center portion 30. The intermediate portion 34 is inclined with respect to the shoulder portion and the center portion.

In one embodiment of the invention, the sipe blade is one piece. The center sipe blade 100 and the shoulder sipe blade 104 are integrally formed.

It is understood that features described in relation with the sipe blade apply to the sipe of the tread element as the sipe is obtained by the blade sipe; and vice versa.

## Claims

1. A tire tread comprising a groove (26) with a groove depth and a tread element (22) adjacent to the groove (26), the tread element (22) comprising a tread surface (20) intended to engage a ground surface, a radial direction (R) perpendicular to the tread surface (20), and a sipe (24) radially extending from the tread surface (20), wherein the sipe (24) has, along the radial direction (R), an outer section (52) parallel to the radial direction (R), an inner section (54) parallel to the radial direction (R), said inner section (54) comprising an even outer edge (56), and an inclined section (58) between the outer section (52) and the inner section (54), said inclined section (58) being inclined with respect to the radial direction (R) under an inclination angle of at most 60° and/or at least 5° and said inclined section (58) comprising undulations (82) extending along the even outer edge (56).

2. The tire tread in accordance with claim 1, wherein the inclination angle ranges from 5° to 30° or from 10° to 25°.

3. The tire tread in accordance with claim 1 or 2, wherein the inclined section (58) radially extends over 20% to 75% of the groove depth and/or wherein the inner section (58) comprises an inner radial height ranging from 20% to 75% of the groove depth.

4. The tire tread in accordance with at least one of the previous claims, wherein the outer section (52) comprises an outer radial height ranging from 0.05 mm to 2.00 mm or from 0.2 mm to 1 mm; and/or wherein the inner section is radially larger than the outer section.

5. The tire tread in accordance with at least one of the previous claims, wherein the sipe (24) comprises a radial connection (88) joining the inclined section (58) to the inner section (54), the radial connection (88) comprising an undulated outer edge (90) and an even inner edge (92) adjacent to the even outer edge (56), the radial connection (88) preferably extending along on one of: at least 5%, at least 10%, at least 15%, of the groove depth.

6. The tire tread in accordance with at least one of the previous claims, wherein the sipe (24) comprises a main portion (96) enclosing the undulations (82) and side projections (98) extending from the main portion (96), the side projections (98) being radially at distance from the inner section (54).

7. The tire tread in accordance with at least one of the previous claims, wherein the tread element (22) comprises a chamfered leading edge (72) and a chamfered trailing edge (74) with a chamfer height which is radially larger than the outer section (52).

8. The tire tread in accordance with at least one of the previous claims, wherein the undulations (82) of the inclined section (58) radially extend in the outer section (52), said undulations (82) being continuous from the inclined section (58) to the outer section (52); and/or wherein the undulations (82) comprise a constant amplitude along a radial height and an axial length of the inclined section (58).

9. The tire tread in accordance with at least one of the previous claims, wherein the chamfered leading edge (72) comprises an axial direction, wherein the tread element (22) comprises a first main elongation which is inclined of a first bias angle with respect to the axial direction, and wherein the tire tread further comprises a second tread element having:
a second radial direction;
a second main elongation which is inclined under a second bias angle with respect to the axial direction, said second bias angle being opposite to the first inclination angle;
a second sipe which radially extends from the tread surface along the second radial direction, wherein said second sipe has a second outer section parallel to the second radial direction, a second inner section parallel to the second radial direction, said second inner section comprising a second even outer edge, and a second inclined section between the second outer section and the second inner section, said second inclined section being inclined with respect to the radial direction under a second inclination angle of at most 60° and/or at least 5° and said second inclined section comprising second undulations extending along the second even outer edge.

10. A tire tread comprising a groove (26) with a groove depth and a tread element (22), the tread element (22) comprising a tread surface (20), a radial direction (R) perpendicular to the tread surface (20), an axial direction (A), a center portion (30), and a shoulder portion (32) axially outward the center portion (30);
wherein the center portion (30) comprises:
a center sipe radially extending from the tread surface, the center sipe having a center outer section perpendicular to the tread surface; a center inner section perpendicular to the tread surface, said center inner section comprising an even outer edge, and a center inclined section between the center outer section and the center inner section, said center inclined section being inclined with respect to the radial direction under an inclination angle and said inclined section comprising undulations extending along the even outer edge; and wherein the center portion (30) comprises a center main direction inclined of a first angle with respect to the axial direction at the tread surface (20);
wherein the shoulder portion (32) comprises:
a shoulder sipe radially extending from the tread surface, the shoulder sipe having a shoulder outer section perpendicular to the tread surface; a shoulder inner section perpendicular to the tread surface; and a shoulder inclined section inclined with respect to the radial direction, the shoulder inclined section being between the shoulder outer section and the shoulder inner section and comprising two smooth opposite faces; and wherein the shoulder portion (32) comprises a shoulder main direction inclined under a second angle with respect to the axial direction, said first angle being larger than the second angle.

11. The tire tread in accordance with claim 10, wherein the first angle is one of: at least 40°, at least 60°, at least 75°.

12. The tire tread in accordance with claim 10 or 11, wherein the undulations of the center inclined section comprise a mid-plane and an undulation height with respect to the mid-plane; and wherein at least one of the shoulder inner section and the center inner section comprises bosses with a boss height, said boss height being smaller than the undulation height.

13. The tire tread in accordance with at least one of the claims 10 to 12, wherein one or more or any combination or all of the following is true:
a) the shoulder sipe comprises a chamfer at a leading side, and a sharp edge at a trailing side;
b) the shoulder inner section comprises a sipe bottom with a side end, said side end comprising a continuous curvature extending up to the tread surface;
c) the tread element comprises a curved portion axially joining the shoulder portion and the center portion, the center sipe extending within the curved portion;
d) at the tread surface, the shoulder portion comprises a first width perpendicularly to the shoulder main direction and the center portion comprises a second width perpendicularly to the center main direction, said first width being larger than the second width.

14. A tire, preferably a pneumatic tire, having a tire tread in accordance with at least one of the previous claims.

15. A sipe blade for molding a sipe in a tire tread element, wherein said sipe blade (80) has a radial direction (R) and wherein, along the radial direction (R), the sipe blade (80) comprises:
an outer section (52) parallel to the radial direction (R);
an inclined section (58) inclined with respect to the radial direction (R) under an inclination angle ranging from 5° to 60°;
main undulations (82) spanning in the inclined section (58) and comprising a radially inner end (84); and
an inner section (54) parallel to the radial direction (R), said inner section (54) comprising an even outer edge (56) extending along the undulations (82) and being radially inward the radially inner end (84).
